# EUROPÄISCHE PATENTSCHRIFT

(11) **EP 0 199 058 B1**
(45) Veröffentlichungstag und Bekanntmachung des Hinweises auf die Patenterteilung: **23.06.1993**
(21) Anmeldenummer: 86103325.6
(22) Anmeldetag: 12.03.1986
(51) Int. Cl.: H04B 7/08

(54) **Verfahren und Schaltungsanordnung zur Verbesserung des Empfangs von Radiowellen**
Method and circuit arrangement for the reception of radio waves
Procédé et montage pour l'amélioration de la réception d'ondes radio

(30) Priorität: 23.03.1985 DE 3510580
(43) Veröffentlichungstag der Anmeldung: 29.10.1986
(60) Teilanmeldung: 92115650.1
(73) Patentinhaber: Blaupunkt-Werke GmbH, 31132 Hildesheim (DE)
(72) Erfinder: Henze, Werner, Dipl.-Ing., D-3053 Hohnhorst (DE); Bochmann, Harald, Dr.-Ing., D-3000 Hannover 21 (DE)
(74) Vertreter: Eilers, Norbert, Dipl.-Phys.

(56) Entgegenhaltungen:
- EP-A- 0 128 812
- THE BELL SYSTEM TECHNICAL JOURNAL, Band 62, Nr. 1, Teil 1, Januar 1983, Seiten 63-89, American Telephone and Telegraph Co., Murray Hill, New Jersey, US; P.D. KARABINIS: "Maximum-power and amplitude-equalizing algorithms for phase control in space diversity combining"
- ALTA FREQUENZA, Band 47, Nr. 11, November 1978, Seiten 763-780, Milano, IT; P. QUARTA: "Some remarks on space diversity systems in large capacity radio paths across water"
- N.E.C. RESEARCH & DEVELOPMENT, Nr. 69, April 1983, Seiten 31-35, Tokyo, JP; Y. KITAHARA et al.: "New IF combiner for microwave radio relay system"
- SECOND INTERNATIONAL CONFERENCE ON TELECOMMUNICATION, TRANSMISSION - INTO THE DIGITAL ERA, 17.-20. März 1981, Seiten 102-105, IEE, London, GB; J.M. ROBINSON et al.: "An electronic diversity combining system for use in terrestrial radio relay systems"
- Taschenbuch der Hochfrequenztechnik - H. Meinke und F.W. Gundlach; Springer Verlag 1968 - Seite 1527
- Lehrbuch der Funkempfangstechnik - Helmut Pitsch - Band II - Akademische Verlagsgesellschaft Geest & Portig K.G. Leipzig 1964 - Seite 752

## Beschreibung

Die Erfindung geht aus von einer Schaltungsanordnung nach der Gattung des Hauptanspruchs.

Zur Verbesserung des Empfangs von Radiowellen im VHF-Bereich in Fahrzeugen ist es bereits bekannt, zwischen Signalen, welche mit an verschiedenen Stellen der Karosserie angeordneten Stabantennen empfangen wurden, je nach der Qualität des Signals umzuschalten (DOS 25 14 181). Eine Umschaltung der Antenne kann dann Vorteile bringen, wenn durch die Fortbewegung sich die Empfangsverhältnisse ständig ändern. Dieser sogenannte Diversity-Empfang bedingt recht aufwendige Empfangseinrichtungen.

Aufgabe der vorliegenden Erfindung ist es, unter Verwendung von möglichst geringem technischen Aufwand den Empfang von Radiosignalen im VHF-Bereich in Fahrzeugen zu verbessern.

Zur Verminderung von Störungen der Signalwiedergabe eines UKW-Stereo-Autoempfängers bei Mehrwegeempfang mit einer Stabantenne ist es bekannt, die Signalwiedergabe in Abhängigkeit von der Amplitudenmodulation des Zwischenfrequenzsignals von Stereo- auf Mono-Wiedergabe umzuschalten (DBP 29 29 647).

Die erfindungsgemäße Lösung der Aufgabe ist durch die Merkmale des Hauptanspruchs gekennzeichnet und hat den Vorteil, daß die Ableitung eines optimalen Signals aus mehreren VHF-Antennensignalen möglich ist, wodurch auch die Signalwiedergabe bei Stereoempfang in einer anderen als der bekannten Weise verbessert wird.

Ein Ausführungsbeispiel der Erfindung ist in der Zeichnung anhand von mehreren Figuren dargestellt und in der nachfolgenden Beschreibung näher erläutert. Es zeigen:
- Figur 1: das Blockschaltbild der zum Verständnis der Erfindung erforderlichen Teile eines UKW-Stereoempfängers mit einem ersten Ausführungsbeispiel,
- Figur 2: einen Ausschnitt aus Figur 1 in etwas detaillierterer Darstellung,
- Figur 3: Zeigerdiagramme zur Veranschaulichung der Funktion der Schaltungsanordnung nach Figur 1 und 2, und
- Figur 4: ein Flußdiagramm für das Programm eines das erfindungsgemäße Verfahren steuernden Mikrocomputers.

Gleiche Teile sind in den Figuren mit gleichen Bezugszeichen versehen.

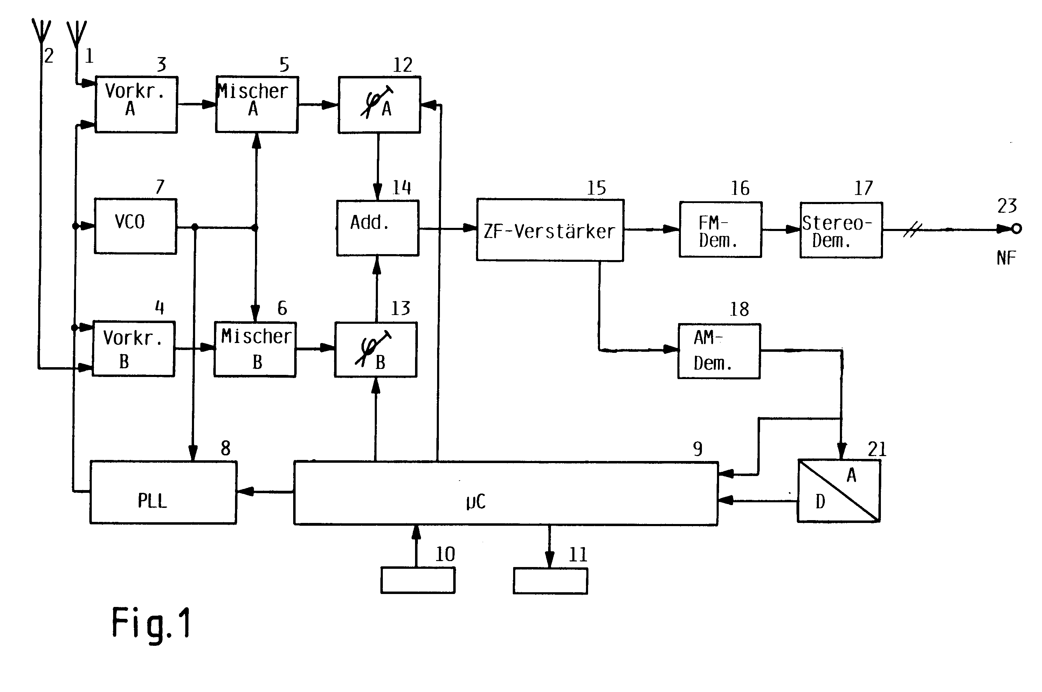

Bei dem in Figur 1 dargestellten Empfänger gelangen von den Antennen 1 und 2 empfangene Signale über die Vorkreise 3 und 4 zu den Mischern 5 und 6, wo sie mit einem von dem Oszillator 7 erzeugten Träger gemischt werden. In den Figuren und in der nachfolgenden Beschreibung sind Angaben und Teile, die sich auf das Signal der Antenne 1 beziehen, mit dem Index A versehen, während der Index B auf das Signal der Antenne 2 hinweist. Die Abstimmung des Oszillators 7 sowie der Vorkreise 3 und 4 erfolgt in an sich bekannter Weise mit Hilfe einer PLL-Schaltung B, die wiederum von einem Mikrocomputer 9 gesteuert wird, welcher mit Bedienelementen 10 und Anzeigen 11 in Verbindung steht. Die Ausgangssignale der Mischer 5 und 6 (im folgenden Mischsignale genannt) werden über jeweils ein steuerbares Phasendrehglied 12 und 13 einem Addierer 14 zugeführt, der die Mischsignale vektoriell addiert und das Summensignal an den ZF-Verstärker 15 weiterleitet. Diese Aufbau bewirkt, daß Phasensprünge und ein großer Steuerbereich von über 360° für das einzelne Phasendrehglied vermieden werden.

Das Ausgangssignal des ZF-Verstärkers 15 wird dann in an sich bekannter Weise begrenzt, in einem FM-Demodulator 16 demoduliert und danach die Nutzmodulation einem Stereodemodulator 17 zugeführt. Das NF-Signal kann dann zur weiteren Verstärkung und Wiedergabe am Schaltungspunkt 23 abgenommen werden.

Einem AM-Demodulator 18 wird dagegen ein unbegrenztes ZF-Signal zur Durchführung des erfindungsgemäßen Verfahrens zugeführt. Der AM-Demodulator 18 dient zur Messung der Amplitude des ZF-Signals.

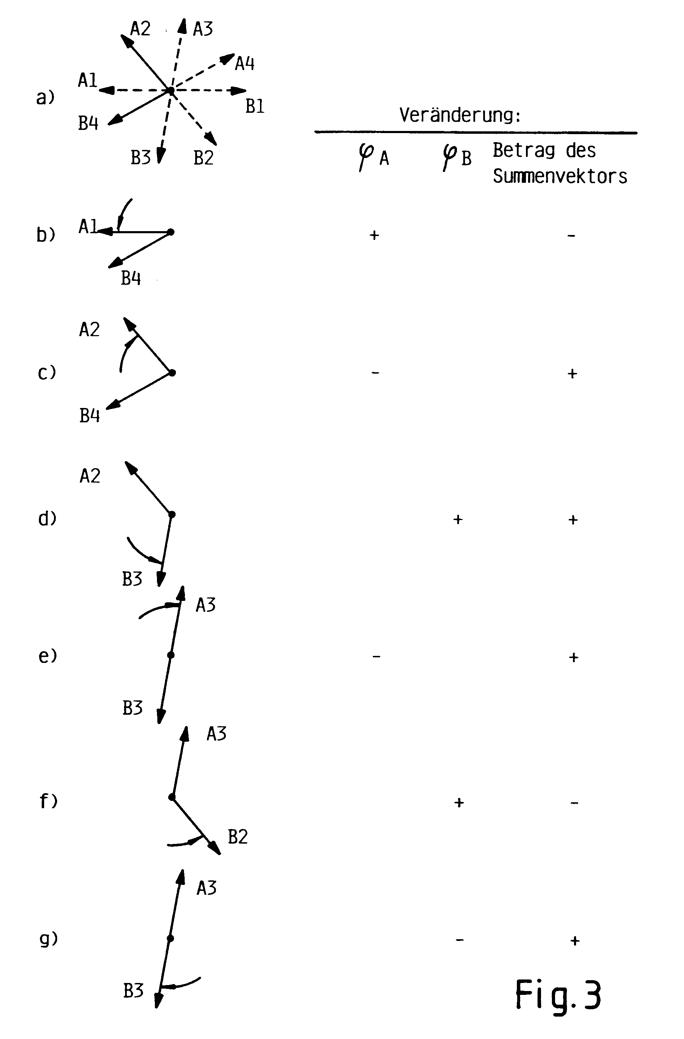

Das Ergebnis der Messung wird einem Analog-Digital-Wandler 21 zugeführt, dessen digitales Ausgangssignal einem Mikrocomputer 9 zugeführt wird. Bevor auf die Funktion des erfindungsgemäßen Ausführungsbeispiels - insbesondere anhand von Figur 3 - genauer erläutert wird, wird im folgenden diese Funktion nur ganz kurz beschrieben.

Von Zeit zu Zeit verändert der Mikrocomputer die Phasenlage der Mischsignale zueinander. Wird daraufhin das Ausgangssignal des AM-Demodulators 18 kleiner, erfolgt eine Verschiebung der Phasenlagen in die andere Richtung und wiederum eine Messung der sich dann ergebenen ZF-Signal-Amplitude. Durch eine derartige Iteration der Phasenlage zwischen den Mischsignalen wird die ZF-Signal-Amplitude optimiert.

Diese erforderlichen Schritte sind im Mikrocomputer 9 als Programm festgelegt.

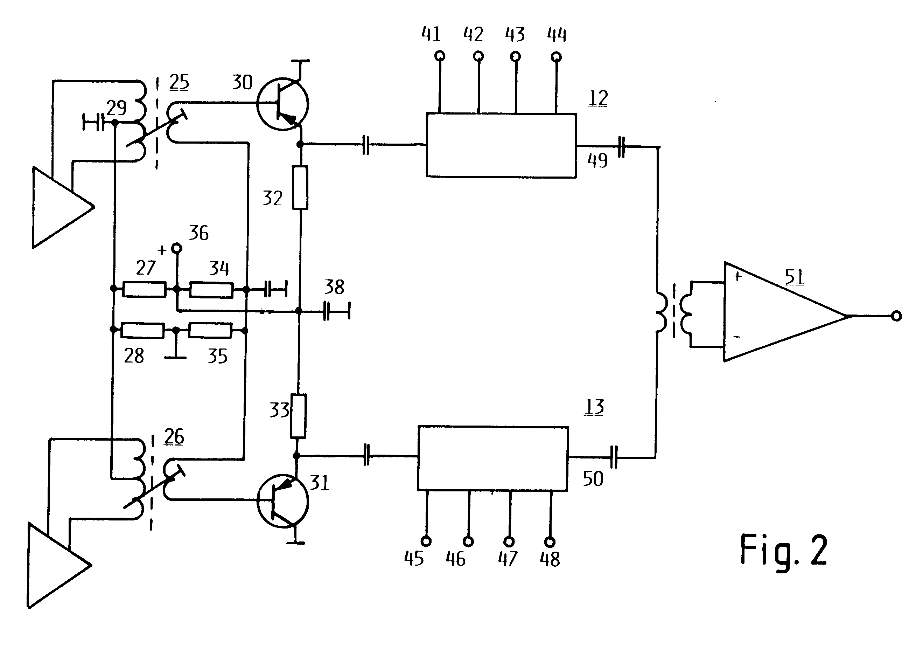

In Figur 2 sind die Schaltungen 12, 13 und 14 detaillierter dargestellt. Von den Mischern 5 und 6, die an sich bekannt sind, sind lediglich die Gegentaktausgangsübertrager 25, 26, zwei Widerstände 27, 28 zur primärseitigen Spannungsversorgung sowie ein Siebkondensator 29 gezeigt. Zur Weiterleitung der Mischsignale zu den Phasendrehgliedern 12 und 13 dient jeweils ein Transistor 30, 31 als Impedanzwandler mit je einem Arbeitswiderstand 32, 33. Zur Versorgung der Basen der Transistoren 30, 31 mit Spannung dient ein Spannungsteiler aus den Widerständen 34, 35, welcher zwischen die bei 36 zugeführte positive Betriebsspannung und Massepotential geschaltet ist. Ferner wird eine bei 37 zugeführte positive Betriebsspannung durch einen Kondensator 38 abgeblockt.

Den Phasendrehgliedern 12 und 13 werden über die Eingänge 41 bis 48 digitale Steuersignale zugeführt. Die Phasendrehung wird bei dem in Figur 2 gezeigten Ausführungsbeispiel durch steuerbare Verzögerungsleitungen bewirkt, die jeweils eine Signallaufzeit von 4 bis etwa 52 ns aufweisen. Durch die Wahl des binären Vorgabewertes kann die Phase der Mischsignale stufenweise verstellt werden. Die phasengedrehten Mischsignale stehen dann an den Ausgängen 49 und 50 der Phasendrehglieder 12 und 13 zur Verfügung. Der Betrag der vektoriellen Differenz dieser Signale wird dann im Operationsverstärker 51 verstärkt.

Als Phasendrehglieder 12, 13 können auf dem Markt erhältliche digital steuerbare Verzögerungsleitungen, wie sie beispielsweise von der Firma Data Delay Devices Inc., USA, unter der Bezeichnung PDU-1316 vertrieben werden, verwendet werden.

Die Funktion der in den Figuren 1 und 2 dargestellten Schaltungsanordnung wird nun mit Hilfe der Diagramme in Figur 3 näher erläutert.

Die Figuren 3 a) bis g) stellen jeweils vektoriell die ZF-Komponenten der Ausgangssignale der Mischer 5 und 6 dar, und zwar jeweils in jeweils 4 verschiedenen Phasenlagen, entsprechend der Einstellung der Phasendrehglieder 12 und 13. Bei der Darstellung gemäß Figur 3 wurde davon ausgegangen, daß durch die Schaltung der übertrager 25, 26 die Signale A und B bei gleichphasigen Antennensignalen bereits eine Phasenlage von 180° zueinander aufweisen. Daraus ergibt sich bei gleicher Einstellung der beiden Phasendrehglieder 12 und 13 durch die Subtraktion an den Eingängen des Operationsverstärkers 51 (Figur 2) letztlich die gewünschte Addition. Bei den Vektordiagrammen nach Figur 3 ergibt sich der Betrag des Summenvektors also aus der Verbindungslinie der jeweiligen Pfeilspitzen.

In Zeile a) der Figur 3 sind die ZF-Komponenten A und B der Mischsignale jeweils in vier verschiedenen Phasenlagen dargestellt, welche durch entsprechende Ansteuerung der Phasendrehglieder 12 und 13 erzielt werden. Wie bereits oben erwähnt, setzt die Darstellung gleichphasige Antennensignale voraus, so daß die Signale A und B bei jeweils gleicher Einstellung der Phasendrehglieder 12 und 13 um 180° phasenverschoben sind. Es sei angenommen, daß in dem dargestellten Augenblick die Signale A2 und B4 zum Addierer 14 weitergeleitet werden. Die übrigen Signale sind daher gestrichelt gezeichnet.

Entsprechend dem gespeicherten Programm prüft der Mikrocomputer 9 (Figur 1), ob mit einer anderen Einstellung ein besserer Empfang zu erzielen ist. Dabei wird in einem ersten Schritt das Phasendrehglied 12, wie in Zeile b) dargestellt, beeinflußt. Anstelle des Signals A2 wird das Signal A1 zum Addierer 14 geleitet. Die Phase des Signals A wird also in positiver Richtung gedreht. Wie am Zusammenrücken der Pfeilspitzen erkenntlich ist, wird der Betrag des Summenvektors und damit die Amplitude des ZF-Signals kleiner. Dieses wird dem Computer über den AM-Demodulator 18, die Abtast- und Halteschaltung 19 sowie den Analog-Digital-Wandler 21 (Figur 1) mitgeteilt. Daraufhin ändert er die Richtung der Umschaltung des Phasendrehgliedes 12, so daß sich die in Zeile c) dargestellten Verhältnisse ergeben. Der Betrag des Summenvektors ist wieder gestiegen. Daraufhin wird - wie in Zeile d) gezeigt - die Laufzeit des Phasendrehgliedes 13 geändert, so daß nicht mehr das Signal B4, sondern das Signal B3 zum Addierer 14 gelangt. Dadurch hat sich der Betrag des Summenvektors weiter vergrößert, worauf - vom Computer gesteuert - die Phasenlage des Signals A in negativer Richtung beeinflußt wird, was zu einer weiteren Steigerung der Amplitude des ZF-Signals führt (Zeile e).

Bei der nächsten, in Zeile f) dargestellten Änderung wird jedoch die Amplitude des ZF-Signals wieder kleiner, so daß der Mikrocomputer 9 die zuletzt erfolgte Änderung rückgängig macht. Es wird die in Zeile g) dargestellte Phasenlage erreicht.

Der Mikrocomputer 9 prüft von Zeit zu Zeit, ob diese Einstellung noch zu einem optimalen Empfangsergebnis führt. Weisen dann die von den Antennen 1 und 2 empfangenen Signale einen anderen Laufzeitunterschied auf, werden die Phasendrehglieder 12 und 13 automatisch anders eingestellt. Um Fehlsteuerungen zu vermeiden, führen erst mehrere Messungen zur Phasenumschaltung.

Wenn während der Phasendrehung das Meßergebnis nicht einen vorgegebenen Mindestbetrag erreicht, kann davon ausgegangen werden, daß die Signale A und B im wesentlichen größere Rauschanteile enthalten. Nach einer solchen Feststellung wird bei Stereoempfang automatisch auf Monoempfang umgeschaltet.

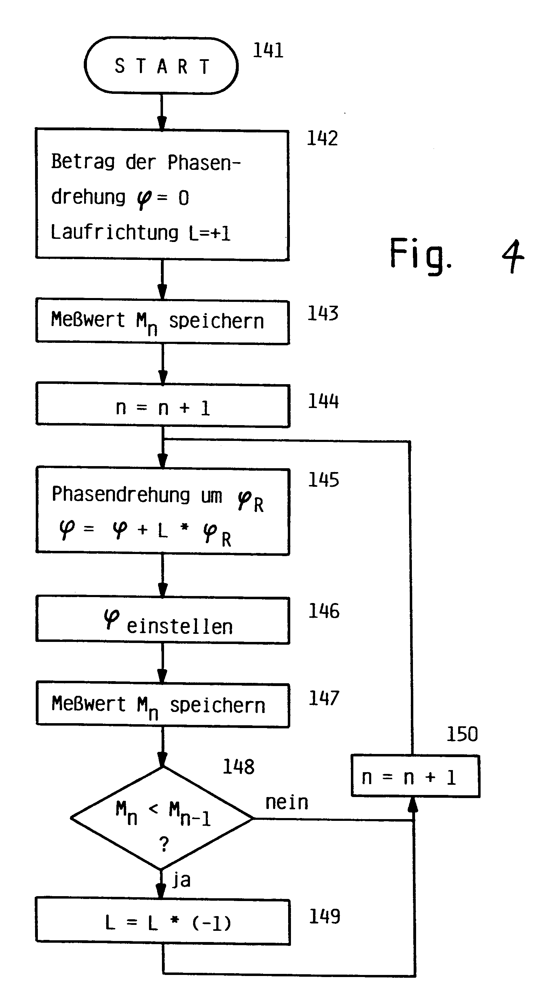

Figur 4 zeigt ein Flußdiagramm für ein Programm, nach dem der Mikrocomputer 9 die beschriebenen Einstellungen vornimmt. Nach dem Start bei 141 wird der Betrag der Phasendrehung auf 0° gesetzt und die Laufrichtung - also das Vorzeichen der nächsten vorzunehmenden Änderung - der Phasendrehung vorgegeben. Nachdem dieses bei 142 durchgeführt wurde, wird der von A/D-Wandler 21 (Figur 1) dem Mikrocomputer zugeführte Meßwert Mₙ gespeichert (Programmteile 143).

Daraufhin wird bei 144 der Index n um 1 erhöht. Die Phasendrehung wird dann im Programmteil 145 um einen inkrementalen Betrag PHI R erhöht. Die Größe dieses Winkels hängt von der erforderlichen Auflösung der Phasendrehung ab. In der Praxis hat sich ein Wert von 5,6° bewährt, wozu für den vom Mikrocomputer 9 an den D/A-Wandler 132 abzugebenden Wert eine Bitbreite von 4 erforderlich ist. Diese Einstellung wird durch Ausgabe der entsprechenden Binärzahl an den D/A-Wandler bewirkt (146). Bei 147 wird dann ein neuer Meßwert Mₙ aufgenommen und mit dem vorangegangenen Meßwert M_{n - 1} verglichen. Ist der neue Meßwert kleiner, wird bei 149 die Laufrichtung geändert und der Vorgang über 150 fortgesetzt. Ist der neue Meßwert jedoch größer, so wird von der Verzweigung 148 ohne Änderung der Laufrichtung das Programm fortgesetzt.

## Patentansprüche

1. Schaltungsanordnung zur Durchführung eines Verfahrens zum Empfang von Radiowellen in VHF-Bereich in Fahrzeugen,
mit mehreren Antennen (1, 2) für diesen Empfang
mit einem UKW-Stereoempfänger (15, 16, 17, 23), der einen ZF-Verstärker (15) umfaßt
und mit einer die Antennen (1, 2) mit dem UKW-Stereo-Empfänger verbindenden Schaltung (3 bis 14),
dadurch gekennzeichnet,
daß in der Schaltung der Eingang des ZF-Verstärkers (15) an den Ausgang einer vektoriellen Addierstufe (14) angeschlossen ist,
daß jeder Eingang der vektoriellen Addierstufe (14) über ein digital steuerbares Phasendrehglied (12, 13) mit dem Ausgang eines Mischers (5, 6) verbunden ist,
daß der Signaleingang jedes Mischers über einen Vorkreis (3, 4) an eine zugeordnete der Antennen (1, 2) angeschlossen ist,
daß die Trägereingänge der Mischer (5, 6) an demselben Ausgang eines gemeinsamen Oszillators (7) angeschlossen sind
daß ein AM-Demodulator (18) an einen Ausgang des ZF-Verstärkers (15) angeschlossen ist, an dem ein unbegrenztes ZF-Signal abnehmbar ist,
und daß das Ausgangssignal des AM-Demodulators (18) über einen Analog-Digital-Wandler (21) und einen Mikrocomputer (9) die einzelnen Phasendrehglieder (12, 13) steuert.

2. Schaltungsanordnung nach Anspruch 1,
dadurch gekennzeichnet,
daß der Mikrocomputer (9) wiederholt die Phasenlage der Mischsignale zueinander ändert, danach die Amplitude des Ausgangssignals des ZF-Verstärkers (15) im AM-Demodulator (18) gemessen wird und daß bei Geringerwerden der Amplitude die Änderungsrichtung der Phasenlage gewechselt wird.

## Claims

1. Circuit arrangement for carrying out a method for the reception of radio waves in the VHF band in vehicles, having a plurality of antennas (1, 2) for this reception, having a VHF-stereo receiver (15, 16, 17, 23) which comprises an IF amplifier (15), and having a circuit (3 to 14) which connects the antennas (1, 2) to the VHF stereo receiver, characterised in that, in the circuit, the input of the IF amplifier (15) is connected to the output of a vectorial adder stage (14), in that each input of the vectorial adder stage (14) is connected via a digitally controllable phase-shifting element (12, 13) to the output of a mixer (5, 6), in that the signal input of each mixer is connected via an input circuit (3, 4) to an associated one of the antennas (1, 2), in that the carrier inputs of the mixers (5, 6) are connected to the same output of a common oscillator (7), in that an AM demodulator (18) is connected to an output of the IF amplifier (15) at which an unlimited IF signal can be picked off, and in that the output signal of the AM demodulator (18) controls the individual phase-shifting elements (12, 13), via an analog/digital converter (21) and a microcomputer (9).

2. Circuit arrangement according to Claim 1, characterised in that the microcomputer (9) repeats the phase angle of the mixed signals modified with respect to one another, after which the amplitude of the output signal of the IF amplifier (15) is measured in the AM demodulator (18), and in that, in the event of the amplitude becoming smaller, the modification direction of the phase angle is changed.

## Revendications

1. Montage pour la mise en oeuvre d'un procédé de réception d'ondes radio dans le domaine VHF dans des véhicules automobiles, à plusieurs antennes (1, 2) pour la réception avec un récepteur stéréo VHF (15, 16, 17, 23) qui comprend un amplificateur FI (15),
et un circuit (13-14) reliant les antennes (1, 2) à ce récepteur stéréo FI,
montage caractérisé en ce que la sortie d'un étage additionneur vectoriel (14) est reliée à l'entrée de l'amplificateur FI (15) dans ce montage,
chaque entrée de l'étage additionneur vectoriel (14) est reliée par un élément de rotation de phase (12, 13) à commande numérique à la sortie d'un mélangeur (5, 6),
l'entrée de signal de chaque mélangeur est reliée par un circuit d'entrée (3, 4) à l'antenne associée (1, 2),
les entrées porteuses des mélangeurs (5, 6) sont reliées à la même sortie d'un oscillateur commun (7),
un démodulateur AM (18) est relié à une sortie de l'amplificateur FI (15) qui fournit un signal FI non limité et
le signal de sortie du démodulateur AM 18 commande les différents organes de rotation de phase 12, 13 par l'intermédiaire d'un convertisseur analogique/numérique (21) et d'un micro-ordinateur (9).

2. Montage selon la revendication 1, caractérisé en ce que le micro-ordinateur (9) modifie de manière répétée la position de phase respective des signaux de mélange puis il mesure l'amplitude du signal de sortie de l'amplificateur FI (15) sur le démodulateur AM (18) et si l'amplitude diminue, il modifie le sens de variation de la position de phase.
